Europäisches Patentamt

(19) European Patent Office

Office européen des brevets

(11) Publication number: **0 228 179**
**B1**

# EUROPEAN PATENT SPECIFICATION

(45) Date of publication of the patent specification:
**10.10.90**

(51) Int. Cl.⁵: **F16J 15/10, F16J 15/14**

(21) Application number: **86309033.8**

(22) Date of filing: **19.11.86**

(54) Concentric sealing rings.

(30) Priority: **19.12.85 US 811065**

(43) Date of publication of application:
**08.07.87 Bulletin 87/28**

(45) Publication of the grant of the patent:
**10.10.90 Bulletin 90/41**

(84) Designated Contracting States:
**CH DE FR GB IT LI NL**

(56) References cited:
**FR-A- 2 261 462**
**US-A- 1 715 854**
**US-A- 3 194 364**
**US-A- 3 819 211**
**US-A- 4 484 750**

(73) Proprietor: **UNISYS CORPORATION, Township Line and Union Meeting Roads, Blue Bell Pennsylvania 19424(US)**

(72) Inventor: **Stansberry, Warren Wayne, 1502 W. Rockwood Drive, Phoenix Arizona 85027(US)**

(74) Representative: **Singleton, Jeffrey et al, Eric Potter & Clarkson St. Mary's Court St. Mary's Gate, Nottingham NG1 1LE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to sealing a volatile fluid within a chamber which is composed of two separate pieces.

Prior art sealing methods for a chamber housing having two separate halves has typically been accomplished using adhesive materials, gaskets and o-rings. Each of the prior art methods has disadvantages relating to leaks, the integrity of the seal or the seal being attacked and decomposed by the fluid in the chamber. Attempts have also been made to seal two halves of a chamber with a thin film of Teflon of similar material. However, Teflon and similar materials tend to "cold flow" or be squeezed away as the two halves of the chamber are tightened together. The present invention permits sealing two components of a chamber housing without the use of adhesives, gaskets, etc., and solves the problem of Teflon and the like cold-flowing away from the area to be sealed.

US-A 1 175 854 discloses apparatus providing a seal between two components, each component having a static sealing face, the apparatus comprising a plurality of concentric rings disposed on each of the static sealing faces, spaces between said rings forming recesses, means for aligning the two components, and a planar gasket material extending across and disposed between the sealing faces.

The present invention is characterised by the two components defining an internal cavity when joined together, by the recesses and rings being disposed on a common axis, by the gasket material having a predetermined density when unconstrained, and having a property of deformation with time when subject to compressive forces, and by means for applying a compressive force to the gasket material so that portions of the material are forced into the recesses, whereby the predetermined density of the material within the recesses increases as the gasket deforms with time.

Apparatus for sealing two components of a fluid chamber in accordance with the present invention will now be described in greater detail, by way of example, with reference to the accompanying drawings, in which:

Figure 1 is an exploded perspective (partly in section) of a fluid chamber showing a Teflon seal and the concentric sealing rings of the present invention, and

Figure 2 is an enlargement of the area immediately adjacent the concentric sealing rings of Figure 1.

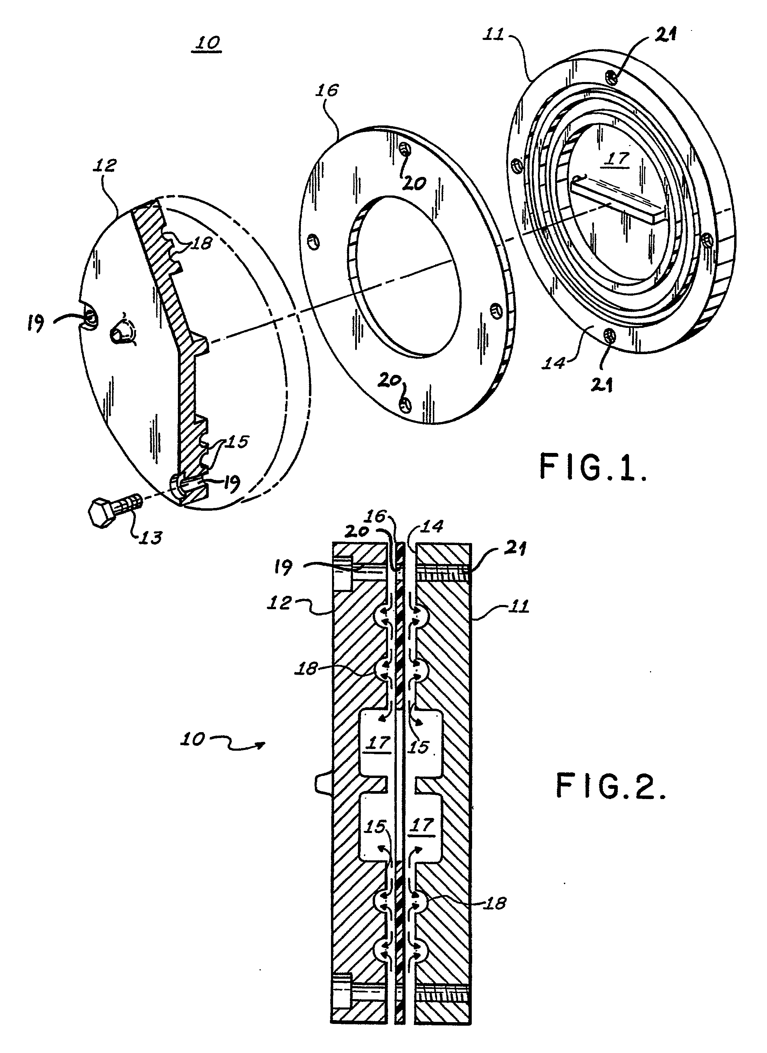

Referring to Figure 1, a fluid chamber 10 comprises two halves 11 and 12 fastened together with a plurality of bolts or screws 13. Each chamber half 11 and 12 has a static sealing face 14 at the inner edge of which is disposed a plurality of concentric rings 15 defined by the static sealing faces 14 and annular recesses 18. A gasket material 16, for example Teflon or similar material, that will not be attacked by the fluid to be contained within chamber 17 is compressed as the chamber halves 11 and 12 are fastened together using the bolts 13 which extend through apertures 19 in the chamber half 12, corresponding apertures 20 in the gasket 16 and corresponding tapped holes 21 in the chamber half 11. The bolts 13 are serve to align the two halves 11 and 12, and hence the recesses 18 and the rings, on a common axis.

Referring now to Figure 2, the effect of the concentric sealing rings 15 will be explained. As the Teflon gasket 16 is compressed between the chamber halves 11 and 12, the Teflon is forced in the direction of the arrows into the recesses 18. The present invention makes use of the cold flow property of Teflon or similar material, the material being trapped in the recesses 18. The density of the trapped gasket material is increased and a reliable seal is formed.

## Claims

1. Apparatus providing a seal between tow components (11, 12), each component having a static sealing face (14), the apparatus comprising a plurality of concentric rings (15) disposed on each of the static sealing faces (14), spaces (18) between said rings forming recesses, means (13) for aligning the two components (11, 12), and a planar gasket material (16) extending across and disposed between the sealing faces (14), characterised in that the two components (11, 12) define an internal cavity (17) when joined together, in that the recesses (18) and rings (15) are disposed on a common axis, in that the gasket material has a predetermined density when unconstrained, and has a property of deformation with time when subject to compressive forces, and in that means (13) are provided for applying a compressive force to the gasket material so that portions of the material are forced into the recesses (18), whereby the predetermined density of the material within the recesses increases as the gasket deforms with time.

## Patentansprüche

1. Vorrichtung zum Erstellen einer Dichtung zwischen zwei Bauteilen (11, 12), die jeweils eine statische Dichtungsfläche (14) aufweisen, umfassend mehrere konzentrische Ringe (15), die auf jeder der statischen Dichtungsflächen (14) angeordnet sind, wobei Zwischenräume (18) zwischen den Ringen Vertiefungen bilden, mit Einrichtungen (13) zum Ausrichten der zwei Bauteile (11, 12), und einem ebenen Dichtungsringmaterial (16), das sich über die Dichtungsflächen (14) erstreckt und zwischen ihnen angeordnet ist, dadurch gekennzeichnet, daß die zwei Bauteile (11, 12) im miteinander vereinigten Zustand einen inneren Hohlraum (17) definieren, daß die Vertiefungen (11) und die Ringe (15) auf einer gemeinsamen Achse angeordnet sind, und daß das Dichtungsringmaterial im unbelasteten Zustand eine vorbestimmte Dichte aufweist und die Eigenschaft hat, sich allmählich zu verformen, wenn es Druckkräften ausgesetzt ist, und daß Einrichtungen (13) vorgesehen sind, um auf das Dichtungsringmaterial eine Druckkraft aufzubringen, so daß Abschnitte des Materials in die Vertiefungen (18) gedrückt werden, wodurch die vorbestimmte Dichte des Materials innerhalb der Vertiefungen zunimmt, wenn sich der Dichtungsring im Verlauf der Zeit vrformt.

## Revendications

Dispositif procurant une jonction étanche entre deux composants (11, 12), chaque composant ayant une face d'étanchéité statique (14), le dispositif comprenant plusieurs anneaux concentriques (15) disposés sur chacune des faces d'étanchéité statique (14), des espaces (18) entre ces anneaux formant des évidements, des moyens (13) pour aligner les deux composants (11, 12) et un matériau de garniture plan (16) s'étendant en travers des faces d'étanchéité (14) et disposé entre elles, characérisé en ce que les deux composants (11, 12) délimitent une cavité interne (17) lorsqu'ils sont reliés ensemble, en ce que les évidements (18) et les anneaux (15) sont disposés sur un axe commun, en ce que le matériau de garniture a une densité prédéterminée lorsqu'il n'est pas soumis à des contraintes et a une propriété de déformation dans le temps lorsqu'il est soumis à des forces de compression, et en ce qu'il est prévu des moyens (13) pour exercer une force de compression sur le matériau de garniture, de façon que des portions du matériau soient refoulées dans les évidements (18), où il résulte que la densité prédéterminée du matériau à l'intérieur des évidements augemente lorsque la garniture se déforme avec le temps.

10

12

16

11    21

18

19

17

14    21

20

20

13

15

19

FIG.1.

16    14
20

19    21

12    11

18

17    15

10

15    17

FIG.2.

18